# EUROPÄISCHE PATENTANMELDUNG

(11) **EP 2 572 826 A1**
(43) Veröffentlichungstag der Anmeldung: **27.03.2013**
(21) Anmeldenummer: 12179756.7
(22) Anmeldetag: 08.08.2012
(51) Int. Cl.: B23Q 17/22

(54) **Vorrichtung und Verfahren zum Bearbeiten eines Werkstücks**

(30) Priorität: 08.08.2011 AT 11392011
(71) Anmelder: WFL Millturn Technologies GmbH & Co. KG, 4030 Linz (AT)
(72) Erfinder: Koll, Reinhard, 4040 Lichtenberg (AT)
(74) Vertreter: Jell, Friedrich

(57) **Zusammenfassung**

Es wird eine Vorrichtung und ein Verfahren zum Bearbeiten eines in einer Werkzeugmaschine (3) über Spannmittel (4) um eine Solldrehachse (6) drehbar aufgespannten Werkstücks (2) mit einem in einer Aufspannung dem Werkstück (2) zustellbaren Werkzeug (9) gezeigt, bei dem unter Verwendung von Sensormessdaten eine Abweichung der Istdrehachse (17) des Werkstücks (2) gegenüber der Solldrehachse (6) der Werkzeugmaschine (3) bestimmt und diese Abweichung bei der Zustellung des Werkzeugs (9) zum Werkstück (2) zur Reduktion von Form- und/oder Lageabweichung am Werkstück (2) berücksichtigt wird. Um hohe Bearbeitungsvorschriften erfüllen zu können, wird vorgeschlagen, dass am Werkstück (2) an seinen beiden Stirnseiten (20, 21) je ein Messmittel (18, 19) mit einer bekannten geometrischen Form befestigt wird und während der Bearbeitung des Werkstücks (2) Messdaten von diesen sich mit dem Werkstück (2) mitdrehenden Messmitteln (18, 19) aufgenommen werden, um über diese Messdaten und unter Berücksichtigung der bekannten geometrischen Form der Messmittel (18, 19) die Abweichung der Ist- zur Solldrehachse (17, 6) des aufgespannten Werkstücks (2) zu bestimmen und diese Abweichung bei der Zustellung des Werkzeugs (9) zum Werkstück (2) im Sinne einer Reduktion von Form- und/oder Lageabweichung am Werkstück (2) zu berücksichtigen.

## Beschreibung

Die Erfindung betrifft eine Vorrichtung und ein Verfahren zum Bearbeiten eines in einer Werkzeugmaschine über Spannmittel um eine Solldrehachse drehbar aufgespannten Werkstücks mit einem in einer Aufspannung dem Werkstück zustellbaren Werkzeug, bei dem unter Verwendung von Sensormessdaten eine Abweichung der Istdrehachse des Werkstücks gegenüber der Solldrehachse der Werkzeugmaschine bestimmt und diese Abweichung bei der Zustellung des Werkzeugs zum Werkstück zur Reduktion von Form- und/oder Lageabweichung am Werkstück berücksichtigt wird.

Um bei Werkstücken Form- und/oder Lageabweichungen verringern zu können, ist es bekannt (EP1663573B1), mit Hilfe eines Messverfahrens Abweichungen einer Istdrehachse des in ein Futter gespannten Werkstücks gegenüber der Solldrehachse der Spannmittel bzw. des Futters der Werkzeugmaschine zu bestimmen, und diese Abweichung bei der Bearbeitung des Werkstücks zu berücksichtigen. Zu diesem Zweck wird vor der Bearbeitung des Werkstücks eine Taumelbewegung des gespannten Werkstücks gemessen, indem wenigstens zwei Sensoren an axial beabstandeten Stellen das zu schleifende Werkstück antasten. Zwar kann ein derartiges Verfahren die Nachteile einer unerwünschten dynamischen Verlagerung während der Dreheinspannung vermindern, die sich aufgrund der Bearbeitung durch das Werkzeug ergebenden Einflüsse kann solch ein Verfahren jedoch nicht berücksichtigen. Dies schon deshalb nicht, weil an der zu bearbeitenden Werkstückkontur gemessen wird, welche Kontur eine Unbekannte darstellt. Daraus ergibt sich eine systematische Messungenauigkeit, da Fehler in der Bewegung nicht eindeutig zur Geometrie oder der sich bewegenden Rotationsachse zugeordnet werden können. Eine vergleichsweise hohe Reduktion von Form und/oder Lageabweichungen kann solch ein Bearbeitungsverfahren nicht gewährleisten. Außerdem ist solch ein Bearbeitungsverfahren durch eine Messung vor einer Bearbeitung des Werkstücks vergleichsweise zeitaufwendig und kann damit auch nachteilig hinsichtlich der Bedienung sein.

Weiter ist aus dem Stand der Technik ein Messverfahren bekannt (DE2000005A1), bei dem der Messfehler durch Berücksichtigung der, in der Lagerung der Aufnahmeprismen auftretenden Fehler verringert wird. Zu diesem Zweck wird an den freien Werkstückenden je ein Messmittel mit einer bekannten geometrischen Form befestigt. Sensoren nehmen während der Drehung des auf Aufnahmeprismen gelagerten Werkstücks Messdaten von den sich mit dem Werkstück mitdrehenden Messmitteln auf. Mit Hilfe dieser Messdaten und unter Berücksichtigung der bekannten geometrischen Form der Messmittel werden Korrektursignale für die gemessene Kreisformabweichung bzw. Form- und/oder Lageabweichung am Werkstück bestimmt. Ein loses Aufliegen eines Werkstücks auf Aufnahmeprismen ist womöglich für Messzwecke, nicht jedoch für Bearbeitungszwecke zur Reduktion einer Form- und/oder Lageabweichung am Werkstück geeignet. Ähnliches ist aus der DD288999A5 bekannt. Hier wird geoffenbart, mit Hilfe eines berechneten Fehlers die Anstellung einer Lünette an das Werkstück zu verändern.

Die Erfindung hat sich nun die Aufgabe gestellt, ein Bearbeitungsverfahren zur Reduktion einer Form- und/oder Lageabweichung an einem Werkstück der eingangs geschilderten Art derart zu verbessern, dass damit höchsten geometrischen Anforderungen an ein damit bearbeitetes Werkstück entsprochen werden kann. Außerdem soll das Verfahren bedienungsfreundlich sein und dynamisch unerwünschten Änderungen von Prozessparametern entgegenwirken können.

Die Erfindung löst die gestellte Aufgabe dadurch, dass am Werkstück an seinen beiden Stirnseiten je ein Messmittel mit einer bekannten geometrischen Form befestigt wird und während der Bearbeitung des Werkstücks Messdaten von diesen sich mit dem Werkstück mitdrehenden Messmitteln aufgenommen werden, um über diese Messdaten und unter Berücksichtigung der bekannten geometrischen Form der Messmittel die Abweichung der Ist- zur Solldrehachse des aufgespannten Werkstücks zu bestimmen und diese Abweichung bei der Zustellung des Werkzeugs zum Werkstück im Sinne einer Reduktion von Form- und/oder Lageabweichung am Werkstück zu berücksichtigen.

Wird am Werkstück an seinen beiden Stirnseiten je ein Messmittel mit einer bekannten geometrischen Form befestigt, dann kann unabhängig von der zu bearbeitenden Werkstückseite eine Messmöglichkeit geschaffen werden, zumal selbst die Stirnseiten der Werkstücke, meist in einem Rohzustand vorliegend, für Messzwecke oftmals ungeeignet sind. Anhand dieser Messmittel kann nun auf einfache Verfahrensweise auf Abweichungen der Soll- gegenüber der Istdrehachse des gespannten Werkstücks, und zwar auch während der Bearbeitung des Werkstücks, rückgeschlossen werden. Zu diesem Zweck kann vorgesehen sein, dass während der Bearbeitung des Werkstücks Messdaten von diesen sich mit dem Werkstück mitdrehenden Messmitteln aufgenommen werden, um über diese Messdaten und unter Berücksichtigung der bekannten geometrischen Form der Messmittel die Abweichung der Ist- zur Solldrehachse des aufgespannten Werkstücks zu bestimmen. Zu dieser Bestimmung der Abweichung sind verschiedenste Verfahren aus dem Stand der Technik bekannt. Beispielsweise kann es ausreichen, über 5 Sensoren eine Verkippung der Werkstücksymmetrieachse (Istdrehachse) gegenüber der Solldrehachse der Spannmittel und damit solch eine Abweichung zu bestimmen. Wird nun diese Abweichung bei der Zustellung des Werkzeugs zum Werkstück im Sinne einer Reduktion von Form- und/oder Lageabweichung am Werkstück berücksichtigt, dann kann ein äußerst robustes Verfahren geschaffen werden, das neben einer umfassenden Berücksichtigung von Fehlereinflüssen auch besonders dynamisch auf unerwünschte Veränderungen der Prozessparameter reagieren kann. So kann beispielsweise mit einer Messung während der Bearbeitung eine dynamische Verlagerung der momentanen Drehachse zur Istdrehachse kompensiert werden, indem die Werkzeuganstellung entsprechend nachjustiert wird. Gegenüber dem Stand der Technik kann die Bearbeitung das Werkstück daher nicht nur nach höchsten geometrischen Anforderungen, sondern durch eine flexible Berücksichtigung von Abweichungen von Prozessparametern auch während dieser Bearbeitung vergleichsweise bedienungsfreundlich sein.

Wird durch eine Durchgangsöffnung eines Drehfutters und/oder einer Arbeitsspindel des Spannmittels auf das Messmittel gemessen, dann kann die Bedienungsfreundlichkeit des Verfahrens noch weiter verbessert werden. Derartige meist für die Zuführung von Stangenmaterial vorgesehene Öffnungen bieten nämlich oftmals ausreichend Bewegungsfreiheit für eine Montage von Sensoren. Vorteilhaft kann weiter sein, dass dabei über solche Öffnungen die Sensoren bzw. auch das Messmittel während einer Aufspannung für Wartungs- und/oder Überprüfungszwecke zugänglich bleiben können.

Um Taumelbewegungen besonders genau bestimmen zu können, kann vorgesehen sein, dass von einem Messmittel Messdaten zu zwei Koordinatenachsen des Werkstücks und vom anderen Messmittel Messdaten zu drei Koordinatenachsen des Werkstücks aufgenommen werden. Damit können die fünf Starrkörper Freiheitsgrade eindeutig bestimmt werden, wobei der Freiheitsgrad zur Rotation um die Istdrehachse vernachlässigt werden kann.

Eine besonders hohe Genauigkeit bei der Bestimmung der Istdrehachse und damit eine deutliche Verringerung der Form und/oder Lageabweichung am Werkstück können sich ergeben, wenn die Messdaten von einer wenigstens teilweise einer Kugelgeometrie folgenden geometrischen Form aufgenommen werden. Eine Kugelkalottenform konnte sich zusätzlich durch eine vereinfachte Montagemöglichkeit an der Stirnseite des Werkstücks auszeichnen, was der Bedienungsfreundlichkeit des Verfahrens förderlich sein kann.

Ebenso kann eine einem Kreisring folgende Form zu präzisen Messergebnissen zur Istdrehachse führen, wenn beispielsweise über eine induktive Messung Messdaten aufgenommen werden. Ein standfestes Verfahren kann so geschaffen werden. Spannt durch wenigstens eine mittige Öffnung am Messmittel ein Spannmittel das Werkstück, dann können trotz Messmittel an der Stirnseite des Werkstücks, bekannte Verfahrensschritte zum Aufspannen des Werkstücks verwendet werden. Das Verfahren zur Bearbeitung des Werkstücks wird daher in seiner Komplexität nicht erhöht, so dass trotz verbesserter Verfahrensergebnisse in der Reduktion von Form- und/oder Lageabweichungen ein bedienungsfreundliches Bearbeitungsverfahren bestehen bleiben kann.

Vereinfachte Verfahrensverhältnisse in der Berücksichtigung der Werkzeuganstellung können sich weiter ergeben, wenn über wenigstens eine geometrische Unregelmäßigkeit an der geometrischen Form eines Messmittels eine Zuordnung der Messdaten zum Drehwinkel der Solldrehachse erfolgt. Eine Eichung der Werkzeugdrehstellung gegenüber der Messeinrichtung bzw. der lagespezifischen Messdaten der Sensoren gegenüber den jeweiligen Messmitteln kann damit vernachlässigt werden. Insbesondere eine Abflachung an der geometrischen Form eines Messmittels konnte besonders einfache Bedienungsverhältnisse ermöglichen. Außerdem kann solch eine Abflachung zur Selbstüberprüfung der Verfahrensparameter auch während der Bearbeitung des Werkstücks verwendet werden. Das erfindungsgemäße Verfahren kann sich daher hinsichtlich seiner Standfestigkeit gegenüber anderen Verfahren auszeichnen.

Die Erfindung konnte sich besonders dann auszeichnen, wenn Messmittel mit einer geometrisch bekannten Form zur Reduktion der Form- und/oder Lageabweichung an einem Werkstück über eine Korrektur der Anstellung eines Werkzeugs an das Werkstück bei der Bearbeitung des in einer Werkzeugmaschine drehbar gespannten Werkstücks verwendet werden. Insbesondere dann, wenn mit Hilfe der an beiden Werkstückenden befestigten Messmittel die Abweichung einer Istdrehachse zu einer Solldrehachse des in der Werkzeugmaschine drehbar gespannten Werkstücks bestimmt wird.

Die Erfindung hat sich außerdem die Aufgabe gestellt, eine Vorrichtung zum Bearbeiten eines Werkstücks der eingangs geschilderten Art auf derart konstruktiv einfache Weise zu schaffen, dass damit standfest eine hohe Genauigkeit in der Reduktion einer Form- und/oder Lageabweichung sichergestellt werden kann. Außerdem soll die Vorrichtung robust gegenüber Parameterschwankungen sein.

Die Erfindung löst die gestellte Aufgabe hinsichtlich der Vorrichtung dadurch, dass die Messeinrichtung wenigstens zwei Messmittel mit einer der Steuereinrichtung bekannten geometrischen Form umfasst, wobei an beiden Stirnseiten des Werkstücks wenigstens je ein Messmittel befestigt ist und die Sensoren von diesen Messmittel Messdaten aufnehmen, und dass die Steuereinrichtung mit diesen Sensoren zur Aufnahme von Messdaten während der Bearbeitung des Werkstücks verbunden ist.

Indem die Messeinrichtung wenigstens zwei Messmittel mit einer der Steuereinrichtung bekannten geometrischen Form umfasst, wobei an beiden Stirnseiten des Werkstücks je wenigstens ein Messmittel befestigt ist und die Sensoren von diesen Messmittel Messdaten aufnehmen, kann die Vorrichtung auf Bewegungseinschränkungen im Bearbeitungsbereich am Werkzeug verzichten. Die erfindungsgemäße Vorrichtung kann daher jeglicher Anstellung des Werkzeugs genügen und damit ohne Einschränkungen in der Bearbeitungsmöglichkeit des Werkstücks ausgezeichnete Ergebnisse hinsichtlich einer Reduktion der Form- und/oder Lageabweichung gewährleisten. Zu diesem Zweck kann die Steuereinrichtung mit diesen Sensoren zur Aufnahme von Messdaten während der Bearbeitung des Werkstücks verbunden sein. Gegenüber dem Stand der Technik kann so eine besonders standfeste und konstruktiv einfache Vorrichtung ermöglicht werden, die höchste Ansprüche bei einer Reduktion von Form- und/oder Lageabweichungen am Werkstück erfüllen kann.

Folgt wenigstens ein Messmittel mindestens teilweise einer Kugelform, kann damit nicht nur eine standfeste Messung der Istdrehachse des Werkstücks, sondern durch die vergleichsweise Unempfindlichkeit in der Anordnung des kugelförmigen Messmittels auch die Standfestigkeit der Vorrichtung erhöht werden.

Einfache Konstruktionsverhältnisse können sich ergeben, wenn ein Spannmittel durch eine Öffnung eines Messmittels das Werkstück spannt. Auf besondere Maßnahmen für Spannmittel kann daher verzichtet werden, und auf bekannte Spannmittel aus dem Stand der Technik zurückgegriffen werden, was eine besonders kostengünstige Vorrichtung schaffen kann.

In den Figuren ist beispielsweise der Erfindungsgegenstand anhand von Ausführungsbeispielen näher dargestellt. Es zeigen
- Fig. 1: eine abgerissene Seitenansicht einer Werkzeugmaschine mit aufgespanntem Werkstück,
- Fig. 2: eine vergrößerte Ansicht der Fig. 1 auf das über eine Spitze aufgespannte Werkstückende,
- Fig. 3: eine vergrößerte Ansicht der Fig. 1 auf das im Futter aufgespannte andere Werkstückende,
- Fig. 4: eine Teilansicht auf ein aufgespanntes Werkstückende mit einem gegenüber Fig. 3 unterschiedlichen Messmittel,
- Fig. 5: eine Ansicht nach V-V der Fig. 4 und
- Fig. 6: eine abgerissene Seitenansicht zu einer nach Fig. 1 dargestellten alternativen Aufspannung.

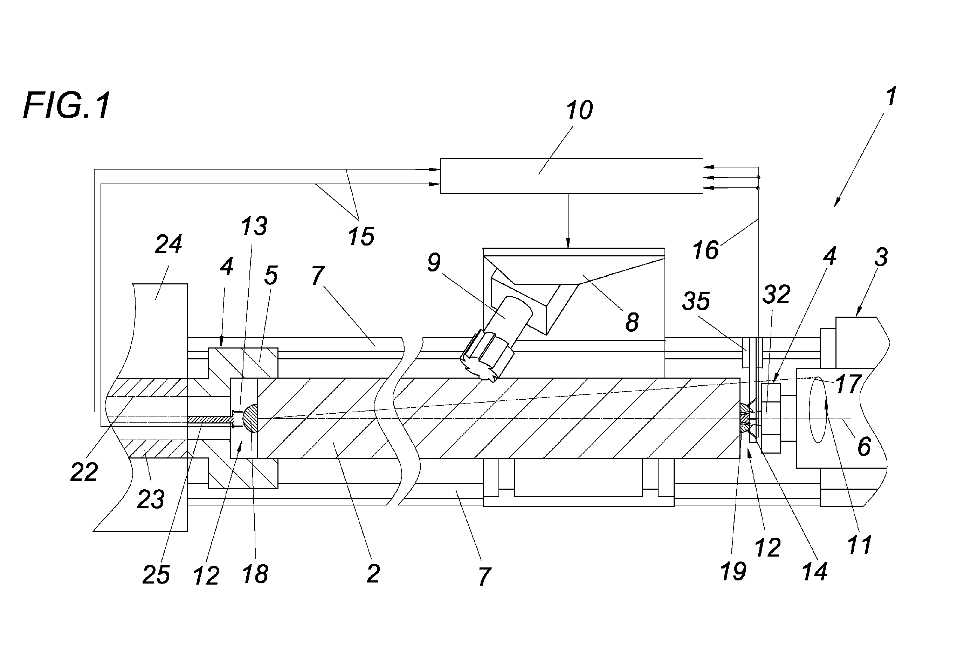

Nach Fig. 1 ist beispielsweise eine Vorrichtung 1 zur Bearbeitung eines Werkstücks 2 dargestellt. Diese Vorrichtung 1 umfasst zum einen eine bekannte mehrachsige Werkzeugmaschine 3, die der Übersichtlichkeit halber lediglich teilweise dargestellt worden ist, und zum anderen ein Werkstück 2, das von der Werkzeugmaschine 3 bearbeitet werden soll, um damit beispielsweise Form- und/oder Lageabweichung zu verringern. Zu diesem Zweck ist das Werkstück 2 über Spannmittel 4 der Werkzeugmaschine 3 um eine Solldrehachse 6 drehbar aufgespannt. Die Werkzeugmaschine weist auch eine auf der Schlittenführung 7 des Gestells bewegliche Werkzeughalterung 8 auf, die ein Werkzeug 9 zur Bearbeitung des Werkstücks 2 trägt. Zur Regelung und/oder Steuerung der Anstellung des Werkszeugs 9 an das Werkstück 2 ist eine Steuereinrichtung 10 vorgesehen. Diese Steuereinrichtung 10 kann nun entsprechend eventueller Bearbeitungsvorgaben eine Bearbeitung des Werkstücks 2 hinsichtlich Form- und/oder Lageabweichungen durchführen. Um beispielsweise eine Taumelbewegung 11 des Werkstücks 2 um die Solldrehachse 6 der Spannmittel 4, was beispielsweise aufgrund anisotroper Steifigkeitstensoren des Futters bzw. Drehfutters 5 des Spannmittels 4 entstehen kann, berücksichtigen zu können, ist der Vorrichtung 1 eine Messeinrichtung 12 zugeordnet. Sensoren 13, 14 der Messeinrichtung 12 nehmen nun Messdaten auf, die der Steuereinrichtung 10 über Datenleitungen 15, 16 übertragen werden. Unter Verwendung dieser Sensormessdaten kann nun in bekannter Weise (vgl. EP1663573B1) von der Steuereinrichtung eine Abweichung der Istdrehachse 17 des Werkstücks 2 gegenüber der Solldrehachse 6 der Werkzeugmaschine 3 bestimmt und diese Abweichung bei der Zustellung des Werkzeugs 9 zum Werkstück 2 zur Reduktion von Form- und/oder Lageabweichungen am Werkstück 2 berücksichtigt werden. Erfindungsgemäß erfolgt dies jedoch auch während der Bearbeitung des Werkstücks 2 durch das Werkzeug 9. Dies wird jedoch erst dadurch möglich, dass die Messeinrichtung 12 wenigstens zwei Messmittel 18, 19 mit einer der Steuereinrichtung 10 bekannten geometrischen Form umfasst, die an beiden Stirnseiten 20, 21 des Werkstücks 2 befestigt sind, und von denen die Sensoren 13, 13' bzw. 14, 14', 14" Messdaten aufnehmen.

Im Allgemeinen wird erwähnt, dass diese Messdaten Daten beinhalten können, die vom Abstand der Sensoren 13, 13' bzw. 14, 14', 14" zu den Messmitteln 18, 19 eine Abhängigkeit aufweisen. Beispielsweise sind hierfür induktive Sensoren vorstellbar. Über diese Daten kann nun in bekannter Weise die Bewegung der Messmitteln 18, 19 im Raum gegenüber den Sensoren 13, 13' bzw. 14, 14', 14" festgestellt werden.

Sich mit dem Werkstück 2 mitdrehende Messmittel 17, 19 befinden sich außerhalb des Bearbeitungsbereichs, sodass das Werkstück 2 ohne Beeinträchtigungen in der Werkzeugführung bzw. -zustellung bearbeitet werden kann. Bedienungsfreundlich kann so eine Form- und/oder Lageabweichung in besonders engen Grenzen gehalten werden.

Um auf konstruktiv einfache Weise eine Zugänglichkeit des Messmittels 18 auch im Bereich eines Drehfutters 5 zu ermöglichen, wird die Durchgangsöffnung 22 des Futters 5 und der Arbeitsspindel 23 des Spindelkastens 24 des Spannmittels 4 hierzu verwendet. Diese meist für Zuführzwecke von Stangenmaterial vorgesehene Öffnung 22 kann so auf elegante Weise auch für Messzwecke dienlich sein, wodurch der konstruktive Aufwand an der Werkzeugmaschine 3 gering bleiben kann. Die Sensoren 13, 13' der Messeinrichtung 12 werden nun durch die Durchgangsöffnung 22 über eine Messstange 25 gegenüber dem Messmittel 18 positioniert, um Messdaten aufnehmen zu können.

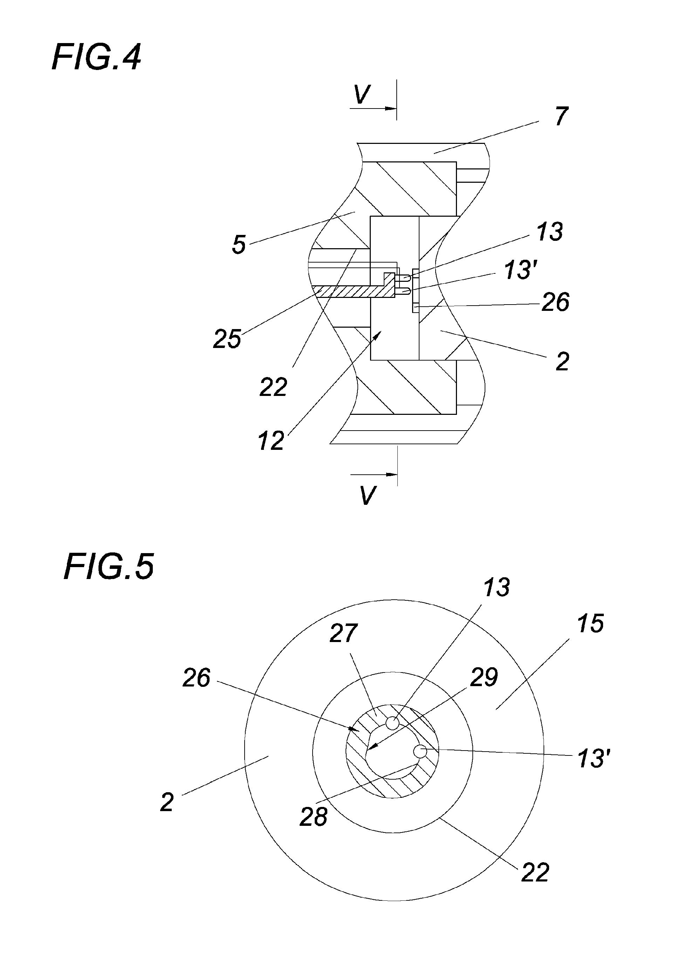

Nach Fig. 4 wird ein alternatives Messmittel 26 dargestellt. Hier ist das Messmittel 26 als magnetische Ringscheibe bzw. als eine einer Kreisringgeometrie 27 folgenden geometrischen Form ausgeführt. Zu diesem Zweck sind, wie insbesondere in Fig. 5 ersichtlich, zwei Sensoren 13 und 13' angeordnet, die an der Kante 28 des Kreisrings Abweichungen der Achsen 17 und 6 über induktive Änderungen am Sensorsignal erkennen können. Induktive Sensoren 13, 13' haben sich dabei für eine besonders genaue Messdatenerfassung ausgezeichnet.

Wie der Fig. 5 weiter entnommen werden kann, weist das Messmittel 26 eine Abflachung 29 auf. Über die geometrische Unregelmäßigkeit dieses Messmittels 26 kann eine Zuordnung der Messdaten zum Drehwinkel der Solldrehachse 6 erfolgen. Eine ebenso vergleichsweise hohe Auflösung dieser Messung kann durch eine Kugelgeometrie 30 bzw. Kugelkalotte der Messmittel 18 und 19 nach den Figuren 1, 2, 3 und 6 geschaffen werden.

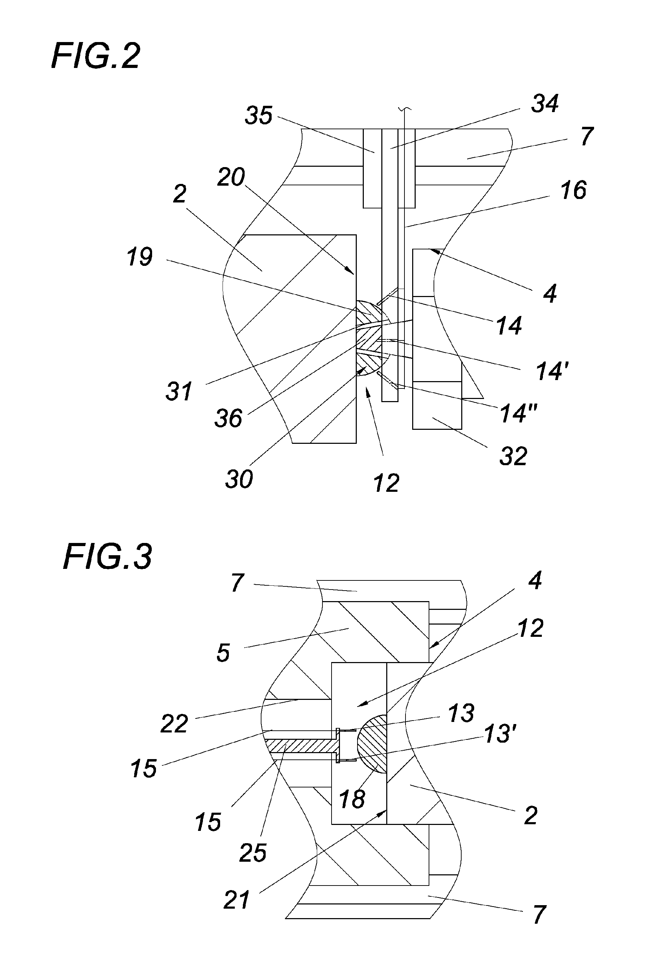

Vorteilhaft hinsichtlich einfacher Spannverhältnisse weist nach Fig. 2 das Messmittel 19 eine Öffnung 31 auf, durch die der Reitstock 32 das Werkstück 2 aufspannen kann. Der Dorn 36 des Reitstocks 32 durchdringt zu diesem Zweck das Messmittel 19 und kann daher auch ungehindert auf das Werkstück 2 spannend wirken, was trotz des Messmittels 19, das an der Stirnseite 20 des Werkstücks 2 befestigt ist, eine standfeste Aufspannung ermöglicht.

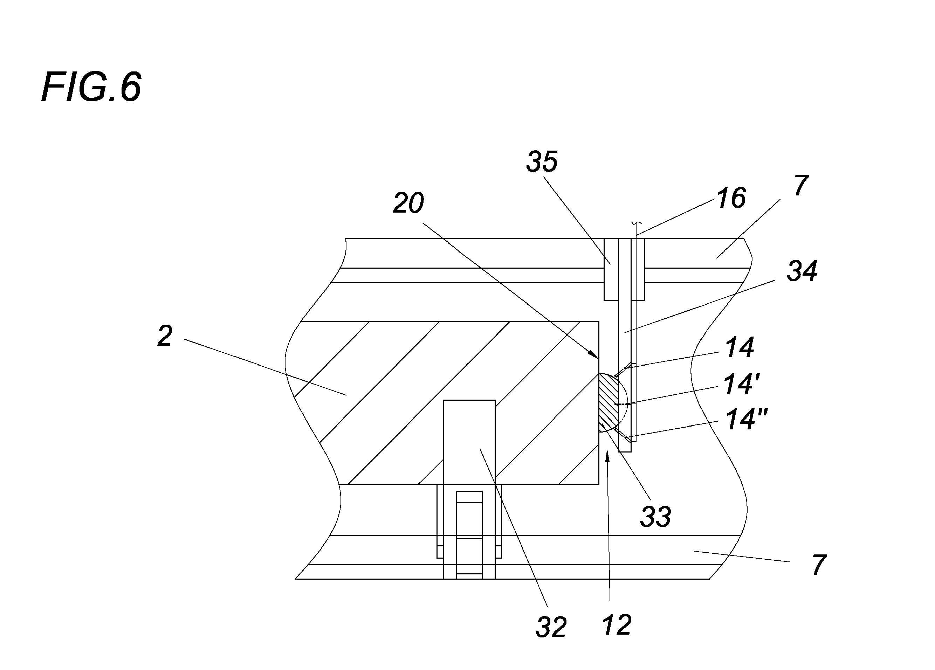

Alternativ zur Aufspannung unter Verwendung eines Reitstocks 32 nach den Figuren 1 und 2 zeigt die Aufspannung nach Fig. 6 eine endseitige Abstützung durch eine Lünette 32. Im Allgemeinen wird erwähnt, dass auch in der Aufspannung nach Fig. 1 Lünetten zur Abstützung des Werkstücks 2 denkbar sind, was nicht näher dargestellt worden ist. Außerdem kann die Aufspannung nach Fig. 6 auch mehrere Lünetten aufweisen, was ebenso nicht dargestellt wurde. Durch solch eine Abstützung ist es möglich, auf der Stirnseite 20 des Werkstücks 2 ein Messmittel 33 zu befestigen, das eine Form, wie das in Fig. 3 dargestellte Messmittel 18, aufweist. Es können daher zwei gleiche Messmittel verwendet werden, was das Verfahren vereinfachen kann. Außerdem kann sich eine Kugelkalottenform des Messmittels 33 hinsichtlich der Messgenauigkeit besonders auszeichnen, was einen vergleichsweise hohen Grad an Reduktion von Form- und Lageabweichungen am Werkstück 2 ermöglichen kann. Wie bereits von den Figuren 1 und 2 bekannt, werden Sensoren 14, 14', 14" gegenüber diesem Messmittel 33 positioniert. Zu diesem Zweck sind die Sensoren an einem Träger 34 befestigt, der über einen an der Schlittenführung 7 gelagerten Schlitten 35 gegenüber dem Werkstück 2 bzw. dem Messmittel 33 positioniert werden kann. Alternativ dazu kann der Träger 34 auch am Reitstock 32 oder am Spindel kasten 24 befestigt werden, was nicht näher dargestellt worden ist.

Durch diese erfindungsgemäße Messung über am Werkstück 2, und zwar an seinen Stirnseiten 21, 20, befestigten Messmitteln 18 bzw. 33 kann nun überraschend eine Zuordnung der dynamischen Verlagerung einerseits vom Drehfutter verursacht und andererseits zurückgehend auf eine Rundlaufabweichung der Lünette 32 erfolgen, wodurch eine erhebliche Verbesserung der Form und/oder Lageabweichungen am Werkstück 2 gewährleistet werden kann.

## Patentansprüche

1. Verfahren zum Bearbeiten eines in einer Werkzeugmaschine (3) über Spannmittel (4) um eine Solldrehachse (6) drehbar aufgespannten Werkstücks (2) mit einem in einer Aufspannung dem Werkstück (2) zustellbaren Werkzeug (9), bei dem unter Verwendung von Sensormessdaten eine Abweichung der Istdrehachse (17) des Werkstücks (2) gegenüber der Solldrehachse (6) der Werkzeugmaschine (3) bestimmt und diese Abweichung bei der Zustellung des Werkzeugs (9) zum Werkstück (2) zur Reduktion von Form- und/oder Lageabweichung am Werkstück (2) berücksichtigt wird, **dadurch gekennzeichnet, dass** am Werkstück (2) an seinen beiden Stirnseiten (20, 21) je ein Messmittel (18, 19) mit einer bekannten geometrischen Form befestigt wird und während der Bearbeitung des Werkstücks (2) Messdaten von diesen sich mit dem Werkstück (2) mitdrehenden Messmitteln (18, 19) aufgenommen werden, um über diese Messdaten und unter Berücksichtigung der bekannten geometrischen Form der Messmittel (18, 19) die Abweichung der Ist- zur Solldrehachse (17, 6) des aufgespannten Werkstücks (2) zu bestimmen und diese Abweichung bei der Zustellung des Werkzeugs (9) zum Werkstück (2) im Sinne einer Reduktion von Form- und/oder Lageabweichung am Werkstück (2) zu berücksichtigen.

2. Verfahren nach Anspruch 1, **dadurch gekennzeichnet, dass** durch eine Durchgangsöffnung (22) eines Drehfutters (5) und/oder einer Arbeitsspindel (23) des Spannmittels (4) auf das Messmittel (18, 19) gemessen wird.

3. Verfahren nach Anspruch 1 oder 2, **dadurch gekennzeichnet, dass** von einem Messmittel (18) Messdaten zu zwei Koordinatenachsen des Werkstücks (2) und vom anderen Messmittel (19) Messdaten zu drei Koordinatenachsen des Werkstücks (2) aufgenommen werden.

4. Verfahren nach einem der Ansprüche 1 bis 3, **dadurch gekennzeichnet, dass** Messdaten von einer wenigstens teilweise einer Kugelgeometrie (30) folgenden geometrischen Form, insbesondere Kugelkalottenform, aufgenommen werden.

5. Verfahren nach einem der Ansprüche 1 bis 3, **dadurch gekennzeichnet, dass** Messdaten von einer wenigstens teilweise einer Kreisringgeometrie (27) folgenden geometrischen Form aufgenommen werden.

6. Verfahren nach einem der Ansprüche 1 bis 5, **dadurch gekennzeichnet, dass** durch wenigstens eine mittige Öffnung (31) am Messmittel (19) ein Spannmittel, insbesondere ein Reitstock (32), das Werkstück (2) spannt.

7. Verfahren nach einem der Ansprüche 1 bis 6, **dadurch gekennzeichnet, dass** über wenigstens eine geometrische Unregelmäßigkeit, insbesondere einer Abflachung (29), an der geometrischen Form eines Messmittels (26) eine Zuordnung der Messdaten zum Drehwinkel der Solldrehachse (6) erfolgt.

8. Verwendung von Messmitteln (18, 19) mit einer geometrisch bekannten Form zur Reduktion der Form und/oder Lageabweichung an einem Werkstück (2) über eine Korrektur der Anstellung eines Werkzeugs (9) an das Werkstück (2) bei der Bearbeitung des in einer Werkzeugmaschine (4) drehbar gespannten Werkstücks (2).

9. Verwendung nach Anspruch 8, **dadurch gekennzeichnet, dass** mit Hilfe der, an beiden Stirnseiten (20, 21) befestigten Messmittel (18, 19), die Abweichung einer Istdrehachse (17) zu einer Solldrehachse (6) des in der Werkzeugmaschine (3) drehbar gespannten Werkstücks (2) bestimmt wird.

10. Vorrichtung zum Bearbeiten eines Werkstücks (2) mit Spannmittel (4) zum Aufspannen des Werkstücks (2) um eine Solldrehachse (6) mit einer beweglichen Werkzeughalterung (8), die ein Werkzeug (9) zur Bearbeitung des Werkstücks (2) aufweist, mit einer mit der Werkzeughalterung (8) verbundenen Steuereinrichtung (10) zum Steuern der Anstellung des Werkzeugs (9) an das Werkstück (2) und mit einer Sensoren (13, 13', 14, 14', 14") aufweisenden Messeinrichtung (12) zur Aufnahme von Messdaten, wobei die Steuereinrichtung (10) einerseits mit der Messeinrichtung (12) zum Bestimmen einer Abweichung der Istdrehachse (17) des Werkstücks (2) gegenüber der Solldrehachse (6) unter Verwendung der Messdaten der Sensoren (13, 13', 14, 14', 14") und andererseits mit der Werkzeughalterung (8) zur Korrektur der Zustellung des Werkzeugs (2) entsprechend der bestimmten Abweichung zwischen Ist- und Solldrehachse (17, 6) verbunden ist, **dadurch gekennzeichnet, dass** die Messeinrichtung (12) wenigstens zwei Messmittel (18, 19) mit einer der Steuereinrichtung (10) bekannten geometrischen Form umfasst, wobei an beiden Stirnseiten (20, 21) des Werkstücks (2) wenigstens je ein Messmittel (18, 19) befestigt ist, und die Sensoren (13, 13', 14, 14', 14") von diesen Messmitteln (18, 19) Messdaten aufnehmen, und dass die Steuereinrichtung (10) mit diesen Sensoren (13, 13', 14, 14', 14") zur Aufnahme von Messdaten während der Bearbeitung des Werkstücks (2) verbunden ist.

11. Vorrichtung nach Anspruch 10, **dadurch gekennzeichnet, dass** das Drehfutter (5) und/oder die Arbeitsspindel (23) der Spannmittel (4) eine Durchgangsöffnung (22) für die Sensoren (13, 13') zur Aufnahme von Messdaten vom diesbezüglichen Messmittel (18) aufweisen.

12. Vorrichtung nach Anspruch 10 oder 11, **dadurch gekennzeichnet, dass** wenigstens ein Messmittel (18, 19) mindestens teilweise einer Kugelform folgt.

13. Vorrichtung nach Anspruch 10, 11 oder 13, **dadurch gekennzeichnet, dass** wenigstens ein Messmittel (26) kreisringförmig ausgebildet ist.

14. Vorrichtung nach einem der Ansprüche 10 bis 13, **dadurch gekennzeichnet, dass** ein Spannmittel (4) durch eine Öffnung (31) eines Messmittels (19) das Werkstück (2) spannt.

15. Vorrichtung nach einem der Ansprüche 10 bis 14, **dadurch gekennzeichnet, dass** ein Messmittel (26) eine Abflachung (29) aufweist.
